# EUROPEAN PATENT APPLICATION

(11) **EP 4 351 271 A2**
(43) Date of publication of application: **10.04.2024**
(21) Application number: 24159132.0
(22) Date of filing: 12.05.2020
(51) Int. Cl.: H04W 92/18

(54) **METHOD AND APPARATUS FOR AN ENHANCED FAILURE REPORT MECHANISM FOR MCG AND SCG**

(62) Divisional of application: 20935481.0
(71) Applicant: Lenovo (Beijing) Limited, Beijing 100085 (CN)
(72) Inventor: WU, Lianhai, Biejing, 100028 (CN)
(74) Representative: Openshaw & Co.

(57) **Abstract**

Embodiments of the present application relate to a method and an apparatus for an enhanced failure report mechanism for a master cell group (MCG) or a secondary cell group (SCG) under a 3rd Generation Partnership Project (3GPP) 5G New Radio (NR) system or the like. According to an embodiment of the present application, a method can include: in response to operating at a radio resource control (RRC) connected state, receiving a RRC reconfiguration message including a reconfiguration with synchronization information element (IE); starting a timer associated with handover, wherein a timer value of the timer associated with handover is included in the reconfiguration with synchronization IE; and performing a random access procedure and synchronising to a target primary cell of a master cell group in response to receiving the RRC reconfiguration message including the reconfiguration with synchronization IE. If DAPS configuration is included in the reconfiguration with synchronization IE, a UE is not allowed to initiate a measurement report. In response to initiating failure information procedure, the UE may stop a timer for initiating failure recovery based on triggering a measurement report.

## Description

### TECHNICAL FIELD

Embodiments of the present application generally relate to wireless communication technology, especially to a method and an apparatus for an enhanced failure report mechanism for a master cell group (MCG) or a secondary cell group (SCG).

### BACKGROUND

When a radio link failure (RLF) or handover failure (HOF) occurs for a user equipment (UE), the UE may perform a radio resource control (RRC) re-establishment procedure. The UE may access a cell by a successful RRC re-establishment procedure, or access a cell by a connection setup procedure in response to an unsuccessful a RRC re-establishment procedure. The accessed network will request UE information including a RLF report of the UE such that the network can optimize the mobility problem based on the UE information from the UE. Accordingly, the UE will transmit a failure report to the network.

Currently, in a 3rd Generation Partnership Project (3GPP) 5G New Radio (NR) system or the like, details regarding how to provide an enhanced failure report mechanism for a MCG and a SCG has not been specifically discussed in 3GPP 5G NR technology yet.

### SUMMARY

Some embodiments of the present application provide a method for wireless communications. The method may be performed by a UE. The method includes: in response to operating at a RRC connected state, receiving a RRC reconfiguration message including a reconfiguration with synchronization information element (IE); starting a timer associated with handover, wherein a timer value of the timer associated with handover is included in the reconfiguration with synchronization IE; and performing a random access procedure and synchronising to a target primary cell of a master cell group in response to receiving the RRC reconfiguration message including the reconfiguration with synchronization IE.

Some embodiments of the present application also provide an apparatus for wireless communications. The apparatus includes: a non-transitory computer-readable medium having stored thereon computer-executable instructions; a receiving circuitry; a transmitting circuitry; and a processor coupled to the non-transitory computer-readable medium, the receiving circuitry and the transmitting circuitry, wherein the computer-executable instructions cause the processor to implement the above-mentioned method performed by a UE.

Some embodiments of the present application provide a further method for wireless communications. The method may be performed by a UE. The method includes: initiating a failure information procedure in response to detecting a RLF for a MCG or a SCG; in response to a physical layer problem timer being running, stopping the physical layer problem timer when a further stop condition is met; and in response to a timer for initiating failure recovery based on triggering a measurement report being running, stopping the timer for initiating failure recovery based on triggering a measurement report when another stop condition is met.

Some embodiments of the present application also provide an apparatus for wireless communications. The apparatus includes: a non-transitory computer-readable medium having stored thereon computer-executable instructions; a receiving circuitry; a transmitting circuitry; and a processor coupled to the non-transitory computer-readable medium, the receiving circuitry and the transmitting circuitry, wherein the computer-executable instructions cause the processor to implement the above-mentioned further method performed by a UE.

The details of one or more examples are set forth in the accompanying drawings and the descriptions below. Other features, objects, and advantages will be apparent from the descriptions and drawings, and from the claims.

### BRIEF DESCRIPTION OF THE DRAWINGS

In order to describe the manner in which advantages and features of the application can be obtained, a description of the application is rendered by reference to specific embodiments thereof, which are illustrated in the appended drawings. These drawings depict only example embodiments of the application and are not therefore to be considered limiting of its scope.
FIG. 1 illustrates a schematic diagram of a wireless communication system in accordance with some embodiments of the present application;
FIG. 2 illustrates an exemplary flowchart of a failure information procedure in accordance with some embodiments of the present application;
FIG. 3 illustrates an exemplary flowchart of an intra-AMF (access and mobility management function) handover procedure in accordance with some embodiments of the present application;
FIG. 4A illustrates an exemplary Vehicle-to-Everything (V2X) communication system 400 in accordance with some embodiments of the present application;
FIG. 4B illustrates an exemplary flowchart of a sidelink RRC reconfiguration procedure in accordance with some embodiments of the present application;
FIG. 4C illustrates an exemplary timeline of a RLF with a fast MCG link recovery procedure in accordance with some embodiments of the present application.
FIG. 5 illustrates a flow chart of a method for a handover procedure in accordance with some embodiments of the present application;
FIG. 6 illustrates a further flow chart of a method for a failure information procedure in accordance with some embodiments of the present application; and
FIG. 7 illustrates a simplified block diagram of an apparatus 700 for an enhanced failure report mechanism in accordance with some embodiments of the present application.

### DETAILED DESCRIPTION

The detailed description of the appended drawings is intended as a description of preferred embodiments of the present application and is not intended to represent the only form in which the present application may be practiced. It should be understood that the same or equivalent functions may be accomplished by different embodiments that are intended to be encompassed within the spirit and scope of the present application.

Reference will now be made in detail to some embodiments of the present application, examples of which are illustrated in the accompanying drawings. To facilitate understanding, embodiments are provided under specific network architecture and new service scenarios, such as 3GPP 5G, 3GPP LTE Release 8 and so on. It is contemplated that along with developments of network architectures and new service scenarios, all embodiments in the present application are also applicable to similar technical problems; and moreover, the terminologies recited in the present application may change, which should not affect the principle of the present application.

Next generation radio access network (NG-RAN) supports a multi-radio dual connectivity (MR-DC) operation. In the MR-DC operation, a UE with multiple transceivers may be configured to utilize resources provided by two different nodes connected via non-ideal backhauls. Wherein one node may provide NR access and the other one node may provide either evolved-universal mobile telecommunication system (UMTS) terrestrial radio access (UTRA) (E-UTRA) or NR access. One node may act as a master node (MN) and the other node may act as a secondary node (SN). The MN and SN are connected via a network interface (for example, Xn interface as specified in 3GPP standard documents), and at least the MN is connected to the core network.

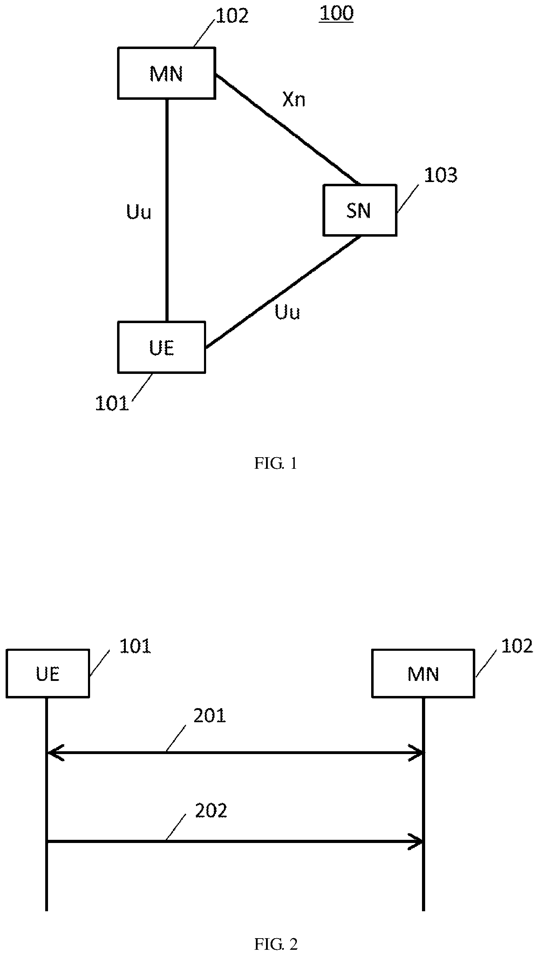

FIG. 1 illustrates a schematic diagram of a wireless communication system in accordance with some embodiments of the present application.

As shown in FIG. 1, the wireless communication system 100 may be a dual connectivity system 100 includes at least one UE 101, at least one MN 102, and at least one SN 103. In particular, the dual connectivity system 100 in FIG. 1 includes one shown UE 101, one shown MN 102, and one shown SN 103 for illustrative purpose. Although a specific number of UEs 101, MNs 102, and SNs 103 are depicted in FIG. 1, it is contemplated that any number of UEs 101, MNs 102, and SNs 103 may be included in the wireless communication system 100.

Referring to FIG. 1, the UE 101 may be connected to the MN 102 and the SN 103 via a network interface, for example, Uu interface as specified in 3GPP standard documents. The MN 102 and the SN 103 may be connected with each other via a network interface, for example, Xn interface as specified in 3GPP standard documents. The MN 102 may be connected to the core network via a network interface (not shown in FIG. 1). The UE 102 may be configured to utilize resources provided by the MN 102 and the SN 103 to perform data transmission.

The MN 102 may refer to a radio access node that provides a control plane connection to the core network. In an embodiment of the present application, in the E-UTRA-NR DC (EN-DC) scenario, the MN may be an eNB. In another embodiment of the present application, in the next generation E-UTRA-NR DC (NGEN-DC) scenario, the MN may be an ng-eNB. In yet another embodiment of the present application, in the NR-DC scenario or the NR-E-UTRA DC (NE-DC) scenario, the MN may be a gNB.

The MN 102 may be associated with a MCG. The MCG may refer to a group of serving cells associated with the MN 102, and may include a primary cell (PCell) and optionally one or more secondary cells (SCells) of the MCG. The PCell may provide a control plane connection to the UE 101.

The SN 103 may refer to a radio access node without a control plane connection to the core network but providing additional resources to the UE 101. In an embodiment of the present application, in the EN-DC scenario, the SN 103 may be an en-gNB. In another embodiment of the present application, in the NE-DC scenario, the SN 103 may be a ng-eNB. In yet another embodiment of the present application, in the NR-DC scenario or the NGEN-DC scenario, the SN 103 may be a gNB.

The SN 103 may be associated with a SCG. The SCG may refer to a group of serving cells associated with the SN 103, and may include a primary secondary cell (PSCell) and optionally one or more secondary cells (SCells).

The PCell of the MCG and the PSCell of the SCG may also be referred to as a special cell (SpCell).

In some embodiments of the present application, the UE 101 may include computing devices, such as desktop computers, laptop computers, personal digital assistants (PDAs), tablet computers, smart televisions (e.g., televisions connected to the Internet), set-top boxes, game consoles, security systems (including security cameras), vehicle on-board computers, network devices (e.g., routers, switches, and modems), or the like. In some other embodiments of the present application, the UE 101 may include a portable wireless communication device, a smart phone, a cellular telephone, a flip phone, a device having a subscriber identity module, a personal computer, a selective call receiving circuitry, or any other device that is capable of sending and receiving communication signals on a wireless network. In some other embodiments of the present application, the UE 101 may include wearable devices, such as smart watches, fitness bands, optical head-mounted displays, or the like. Moreover, the UE 101 may be referred to as a subscriber unit, a mobile, a mobile station, a user, a terminal, a mobile terminal, a wireless terminal, a fixed terminal, a subscriber station, a user terminal, or a device, or described using other terminology used in the art.

FIG. 2 illustrates an exemplary flowchart of a failure information procedure in accordance with some embodiments of the present application. The failure information procedure may be referred to as a failure information report procedure. The embodiments of FIG. 2 include the following embodiments of a SCG failure information procedure or a MCG failure information procedure.

Specifically, in some embodiments of a SCG failure information procedure, in step 201 as shown in FIG. 2, UE 101 and MN 102 may communicate RRC reconfiguration information. In step 202 as shown in FIG. 2, the UE 101 may initiate the SCG failure information procedure and transmit a message associated with a failure for a SCG to the MN 102. The message associated with the failure for the SCG in step 202 may be a *SCGFailureInformation* message as specified in 3GPP standard documents. Then, the MN 102 may handle the *SCGFailureInformation* message and decide whether to keep a SN or a SCG, change the SN or the SCG, or release the SN or the SCG. The SN may be SN 103 as shown and illustrated in FIG. 1.

In the abovementioned embodiments of a SCG failure information procedure, the UE 101 may initiate the SCG failure information procedure to report a failure for the SCG when one of the following conditions is met:
- Upon detecting a failure for the SCG. For example, the failure for the SCG may refer to a RLF happening in a PSCell of the SCG.
- Upon a reconfiguration with synchronization failure of the SCG.
- Upon a SCG configuration failure.
- Upon an integrity check failure indication from lower layer(s) of the SCG concerning signaling radio bearer (SRB) 3.

In 3GPP Release 16, a fast MCG link recovery procedure is introduced for a MR-DC scenario. The fast MCG link recovery procedure may be also referred to as a MCG failure information procedure. The purpose of this procedure is to inform a RLF in a MCG to a MN via a SN connected to a UE, such that the UE in RRC_CONNECTED state may initiate the fast MCG link recovery procedure to quickly continue a RRC connection without performing a re-establishment procedure.

In some other embodiments of FIG. 2 of the present application, in the case that a failure for a MCG happens, the UE 101 may initiate (or, trigger) a fast MCG link recovery procedure, i.e., a MCG failure information procedure.

Specifically, in some embodiments of a MCG failure information procedure, as shown in FIG. 2, in step 201, the UE 101 and the MN 102 may communicate RRC reconfiguration information. In step 202, the UE 101 may initiate a MCG failure information procedure and transmit a message associated with a failure for a MCG to the MN 102. For example, the failure for the MCG may refer to a RLF happening in a PCell of the MCG. The message associated with the failure for the MCG in step 202 may be a *MCGFailureInformation* message as specified in 3GPP standard documents.

In the embodiments of a MCG failure information procedure, the UE 101 may not directly transmit the message associated with the failure for the MCG to the MN 102. Instead, the UE 101 may transmit the message associated with the failure for the MCG to a SN (e.g., SN 103 as shown and illustrated in FIG. 1), and then the SN may transfer the message received from the UE 101 to the MN 102.

For example, the UE 101 may be configured with a split SRB1 or SRB3 to report the MCG failure information when a failure for the MCG happens. In the case that split SRB1 is configured, the UE 101 may submit the *MCGFailureInformation* message to low layer(s), e.g., for transmission via SRB1. In the case that SRB3 is configured, the UE 101 may submit the *MCGFailureInformation* message to low layer(s), e.g., for transmission via SRB3. For instance, the *MCGFailureInformation* message may be embedded in NR RRC message *ULInformationTransferMRDC* as specified in 3GPP standard documents for transmission via SRB3.

When or after transmitting the message in step 202, the UE 101 may start a timer associated with a fast MCG link recovery procedure. In an embodiment of the present application, the timer associated with a fast MCG link recovery procedure may be T316 as specified in 3GPP standard documents.

After receiving the message associated with the failure for the MCG, the MN 102 may further transmit a response message to the UE 101. The response message may be a RRC reconfiguration message including a handover (HO) command for a cell. The response message may be a RRC release message. In an embodiment of the present application, the handover command may be a *reconfigurationWithSync* configuration as specified in 3GPP standard documents. The MN 102 may not directly transmit the response message to the UE 101. Instead, the MN 102 may transmit the response message to a SN (e.g., SN 103 as shown and illustrated in FIG. 1), and then the SN may transfer the response message to the UE 101.

In the case that SRB3 is configured for transmitting the message associated with the failure for the MCG, after receiving the response message from the MN 102, the SN 103 may encapsulate the response message in a *DLInformationTransferMRDC* message as specified in 3GPP standard documents, and then transmit the *DLInformationTransferMRDC* message to the UE 101.

In the abovementioned embodiments of a MCG failure information procedure, the UE 101 may set a MCG failure type (referred to as "*failureType*") as follows:
- If the UE 101 initiates a transmission of the *MCGFailureInformation* message as shown in step 202, due to expiry of a timer T310 (which may be referred to as a physical layer problem timer) as specified in 3GPP standard documents, the UE 101 sets the *failure Type* as *t310-Expiry* as specified in 3GPP standard documents.
- If the UE 101 initiates a transmission of the *MCGFailureInformation* message as shown in step 202, to provide a random access problem indication from of a medium access control (MAC) layer of a MCG, the UE 101 sets the *failureType* as *randomAccessProblem* as specified in 3GPP standard documents.
- If the UE 101 initiates a transmission of the *MCGFailureInformation* message as shown in step 202, to provide indication from MCG radio link control (RLC) that the maximum number of retransmissions has been reached, the UE 101 sets the *failureType* as *rlc-MaxNumRetx* as specified in 3GPP standard documents.

As specified in 3GPP standard documents, a dual active protocol stack (DAPS) handover procedure is introduced to maintain a source base station (BS) connection after a UE receiving a handover command associated with the DAPS handover procedure and until the UE releasing a source cell of the source BS after successfully completing a random access procedure to a target BS.

In the case of implementing a DAPS handover procedure, a UE continues to receive downlink user data from a source BS until releasing a source cell of a source BS, and the UE continues to transmit uplink user data transmission(s) to the source BS until successfully completing a random access procedure to a target BS. When the DAPS handover procedure fails, the UE may report a DAPS handover (HO) failure via the source BS without triggering a RRC connection re-establishment procedure if the source link has not been released.

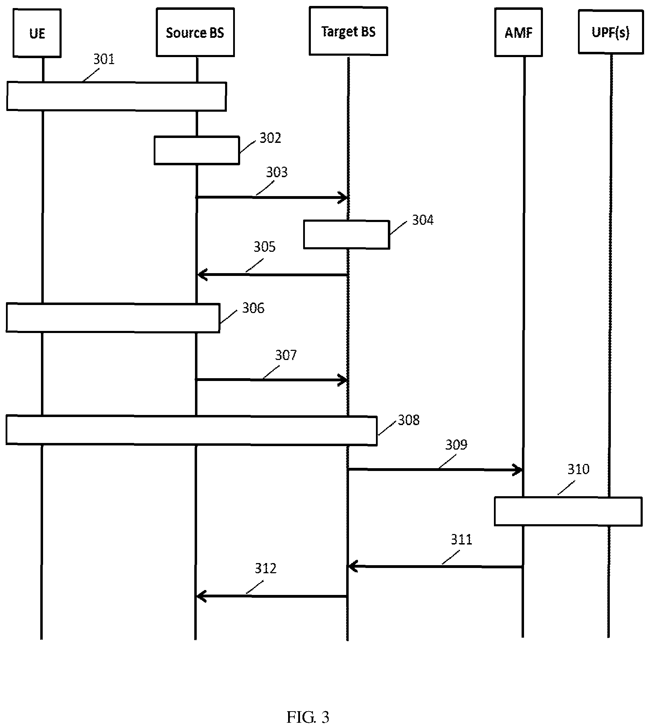

In control plane handling in handover associated with a DAPS handover procedure, messages are directly exchanged between the BSs. A specific example is shown in FIG. 3 as below.

FIG. 3 illustrates an exemplary flowchart of an intra-AMF handover procedure in accordance with some embodiments of the present application. The embodiments of FIG. 3 depict a basic conditional handover scenario where neither an access and mobility management function (AMF) nor user plane functions (UPFs) changes.

Referring to FIG. 3, in step 301, a source BS may transmit measurement configuration information to a UE. The UE may report a measurement result to the source BS based on the measurement configuration information. In step 302, the source BS may decide to handover the UE, which may be based on the measurement result reported by the UE.

In step 303, the source BS may transmit a *HANDOVER REQUEST* message to a target BS. For example, the *HANDOVER REQUEST* message may pass a transparent RRC container with necessary information to prepare a handover procedure at the target BS side.

In step 304, the target BS may perform admission control based on the load of a target cell of the target BS, to decide whether to allow the handover procedure of the UE after receiving the handover request message from the source BS.

In step 305, based on an admission control result, the target BS may prepare handover resource(s) for the UE and send *HANDOVER REQUEST ACKNOWLEDGE* including a RRC reconfiguration message to the source BS.

In step 306, a RAN handover initiation is performed. The source BS may transmit the RRC reconfiguration message to the UE. The RRC reconfiguration message may include reconfiguration with synchronization information element (IE). The RRC reconfiguration message may contain information required to access the target cell of the target BS.

In step 307, the source BS may send the *SNSTATUS TRANSFER* message to the target B S.

In step 308, the UE may access to the target cell and complete the handover procedure by sending *RRCReconfigurationComplete* message to the target BS. In some embodiments of implementing a DAPS handover procedure, the UE does not detach from the source cell upon receiving the *RRCReconfiguration* message. For instance, the UE may release source resource(s) upon receiving an explicit release indication from the target BS.

In step 309, the target BS may send a *PATH SWITCH REQUEST* message to AMF, to trigger a 5G core (5GC) network to switch a downlink (DL) data path towards the target BS.

In step 310, the 5GC network may switch the DL data path towards the target BS. UPF(s) may send one or more "end marker" packets on the old data path to the source BS per a packet data unit (PDU) session or a PDU tunnel. Then, the UPF(s) can release any user plane or transport network layer (TNL) resources towards the source BS.

In step 311, the AMF may confirm the *PATH SWITCH REQUEST* message with the *PATH SWITCH REQUEST ACKNOWLEDGE* message.

In step 312, upon reception of the *PATH SWITCH REQUEST ACKNOWLEDGE* message from the AMF, the target BS may send the *UE CONTEXT RELEASE* message, to inform the source BS about the success of the handover procedure. The source BS can then release radio and control plane related resource(s) associated with the UE context. Any ongoing data forwarding may continue.

The following **Table 1** shows introductions of some timers as specified in 3GPP standard documents, including a starting condition, a stop condition, an operation at expiry, and a possible general name for each of these timers.

| **Timer** | **Start** | **Stop** | **At expiry** | **Name** |
|---|---|---|---|---|
| T300 | Upon transmission of *RRCSetupRequest.* | Upon reception of *RRCSetup* or *RRCReject* message, cell re-selection and upon abortion of connection establishment by upper layers | Perform the actions as specified in sub-clause 5.3.3.7 ofTS38.331. | A Timer for RRC Setup Request |
| T301 | Upon transmission of *RRCReestabilshment Request* | Upon reception of *RRCReestablishment* or *RRCSetup* message as well as when the selected cell becomes unsuitable | Go to a RRC_IDLE state | A timer for RRC Re-establ ishment Request |
| T304 | Upon reception of *RRCReconfiguration* message including *reconfiguration With Sync* or upon conditional reconfiguration execution i.e., when applying a stored *RRCReconfiguration* message including *reconfiguration With Sync.* | Upon successful completion of random access on the corresponding SpCell For T304 of SCG, upon SCG release | For T304 of MCG, in case of the handover from NR or intra-NR handover, initiate the RRC re-establishment procedure; In case of handover to NR, perform the actions defined in the specifications applicable for the source RAT. | A Handove r timer |
| | | | For T304 of SCG, inform network about the reconfiguration with sync failure by initiating the SCG failure information procedure as specified in sub-clause 5.7.3 of TS38.331. | |
| T310 | Upon detecting physical layer problems for the SpCell i.e. upon receiving N310 consecutive out-of-sync indications from lower layers. | Upon receiving N311 consecutive in-sync indications from lower layers for the SpCell, upon receiving RRCReconfiguration with *reconfigurationWithSync* for that cell group, and upon initiating the connection re-establishment procedure. | If the T310 is kept in MCG: If AS security is not activated: go to RRC IDLE state else: initiate the MCG failure information procedure as specified in sub-clause 5.7.3b of TS38.331 or the connection re-establishment procedure as specified in sub-clause 5.3.7 of TS38.331. | A physical layer problem timer |
| | | Upon SCG release, if the T310 is kept in SCG. | | |
| | | | If the T310 is kept in SCG, Inform E-UTRAN/NR about the SCG radio link failure by initiating the SCG failure information procedure as specified in sub-clause 5.7.3 of TS38.331. | |
| T311 | Upon initiating the RRC connection re-establishment procedure | Upon selection of a suitable NR cell or a cell using another RAT. | Enter into a RRC_IDLE state | A timer for RRC connecti on re-establi shment |
| T312 | If T312 is configured in MCG: Upon triggering a measurement report for a measurement identity for which T312 has been configured, while T310 in PCell is running. | Upon receiving N311 consecutive in-sync indications from lower layers for the SpCell, receiving *RRCReconfiguration* with *reconfigurationWithSync* for that cell group, upon initiating the connection re-establishment procedure, and upon the expiry of T310 in corresponding SpCell. | If the T312 is kept in MCG: If security is not activated: go to RRC IDLE else: initiate the connection re-establishment procedure. | A timer for initiating failure recovery based on triggerin g a measure ment report |
| | | | If the T312 is kept in SCG, Inform E-UTRAN/NR about the SCG radio link failure by initiating the SCG failure information procedure.as specified in sub-clause 5.7.3 of TS38.331. | |
| | If T312 is configured in SCG: Upon triggering a measurement report for a measurement identity for which T312 has been configured, while T310 in PSCell is running. | | | |
| | | Upon SCG release, if the T312 is kept in SCG | | |
| T316 | Upon transmission of the *MCGFailureInforma tion* message | Upon resumption of MCG transmission, upon reception of *RRCRelease,* or upon initiating the re-establishment procedure | Perform the actions as specified in sub-clause 5.7.3b.5 of TS38.331. | A timer for fast MCG link recovery |
| T319 | Upon transmission of *RRCResumeRequest* or *RRCResumeRequest* 1. | Upon reception of *RRCResume, RRCSetup, RRCRelease, RRCRelease* with *suspendConfig* or *RRCReject* message, cell re-selection and upon abortion of connection establishment by upper layers. | Perform the actions as specified in sub-clause 5.3.13.5 ofTS38.331. | A timer for *RRC Resume Request* |
| T400 | Upon transmission of RRCReconfiguration Sidelink | Upon reception of RRCReconfigurationFail ureSidelink or RRCReconfigurationCo mpleteSidelink | Perform the sidelink RRC reconfiguration failure procedure as specified in sub-clause 5.8.9.1.8 of TS38.331 | A timer for transmiss ion of RRC reconfigu ration for sidelink |

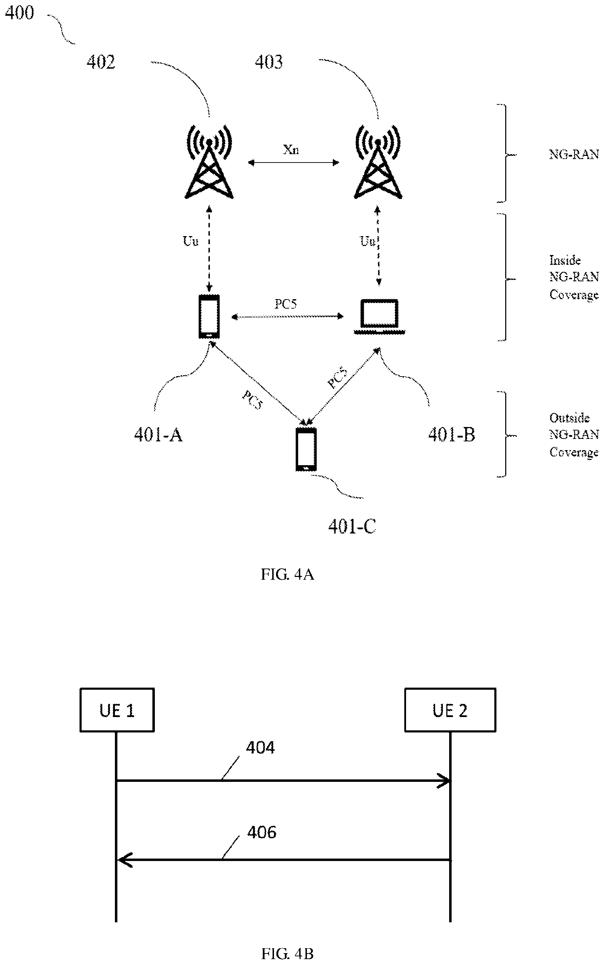

FIG. 4A illustrates an exemplary V2X communication system 400 in accordance with some embodiments of the present application.

As shown in FIG. 4A, the V2X communication system includes one gNB 402, one ng-eNB 403, and some V2X UEs, i.e., UE 401-A, UE 401-B, and UE 401-C. Each of these UEs may refer to UE 101 as shown and illustrated in FIGS. 1 and 2.

In particular, UE 401-A is within the coverage of gNB 402, UE 401-B is within the coverage of ng-eNB 403, and UE 401-C is out of coverage of gNB 402 and ng-eNB 403. Support of V2X services via the PC5 interface can be provided by NR sidelink communication and/or V2X sidelink communication. NR sidelink communication can support one of three types of transmission modes for a pair of a Source Layer-2 ID and a Destination Layer-2 ID: unicast transmission; groupcast transmission; and broadcast transmission. Sidelink transmission and reception over the PC5 interface are supported when the UE is either inside of the NG-RAN coverage or outside of the NG-RAN coverage.

UE 401-A, which is in the coverage of within the coverage of gNB 402, may perform sidelink unicast transmission, sidelink groupcast transmission, or sidelink broadcast transmission over the PC5 interface. UE 401-C, which is out of coverage, can also perform sidelink transmission and reception over the PC5 interface. It is contemplated that, in accordance with some other embodiments of the present application, a V2X communication system may include more or fewer BSs, and more or fewer V2X UEs. Moreover, it is contemplated that names of V2X UEs (which represent a Tx UE, a Rx UE, and etc.) as illustrated and shown in FIG. 4A may be different, e.g., UE 401c, UE 404f, and UE 408g or the like.

In addition, although each V2X UE as shown in FIG. 4A is illustrated in the shape of a cell phone, it is contemplated that a V2X communication system may include any type of UE (e.g., a roadmap device, a cell phone, a computer, a laptop, IoT (internet of things) device or other type of device) in accordance with some other embodiments of the present application.

According to some embodiments of FIG. 4A, UE 401-A functions as a Tx UE, and UE 401-B and UE 401-C function as a Rx UE. UE 401-A may exchange V2X messages with UE 401-B, or UE 401-C through a sidelink, for example, PC5 interface as defined in 3GPP TS 23.303. UE 401-A may transmit information or data to other UE(s) within the V2X communication system, through sidelink unicast, sidelink groupcast, or sidelink broadcast. The sidelink communication includes NR sidelink communication, and V2X sidelink communication. For instance, UE 401-A may transmit data to UE 401-C in a NR sidelink unicast session, and UE 401-B may transmit data to UE 401-C in a V2X sidelink unicast session. UE 401-A may transmit data to UE 401-B and UE 401-C in a groupcast group by a sidelink groupcast transmission session.

Sidelink communication includes NR Sidelink communication and V2X Sidelink communication. FIG. 4A demonstrates the NR Sidelink communication specified in TS 38.311. V2X sidelink communication is specified in TS 36.311.

The V2X UEs may operate in different modes. At least two sidelink resource allocation modes are defined for sidelink communication, which are: mode 1: base station schedules sidelink resource(s) to be used by UE for sidelink transmission(s); and mode 2: UE determines sidelink transmission resource(s) within sidelink resources configured by base station or network, or pre-configured sidelink resources, in mode 2, the base station does not dynamically schedules the sidelink resources for the UE, and the UE decides the sidelink transmission resources and timing in the resource pool based on the measurement result and sensing result. In FIG. 4A, UE 101-A and UE 101-B are in mode 1, and UE 101-C is in mode 2, and in this disclosure, we use UE 101-A representing a transmitting UE in mode 1, and UE 101-C representing another transmitting UE in mode 2.

In mode 1, the UE needs to be in RRC_CONNECTED state in order to transmit data. Base station can dynamically schedule resources to the UE via physical downlink control channel (PDCCH) for NR sidelink Communication. In addition, Base station can allocate sidelink resources to UE with two types of configured sidelink grants:
- Type 1: RRC directly provides the configured sidelink grant only for NR sidelink communication; and
- Type 2, RRC defines the periodicity of the configured sidelink grant while PDCCH can either signal and activate the configured sidelink grant, or deactivate it.

For the UE performing NR sidelink communication, there can be more than one configured sidelink grant activated at a time on the carrier configured for sidelink transmission.

When beam failure or a physical layer problem occurs on NR Uu, the UE can continue using the configured sidelink grant type 1. During handover, the UE can be provided with configured sidelink grants via handover command. If provided, the UE activates the configured sidelink grant type 1 upon reception of the handover command.

When a UE is in mode 2, the UE can transmit data either inside or outside of the coverage of a BS, i.e. either inside NG-RAN coverage or outside NG-RAN coverage. The UE autonomously selects sidelink grant from a pool of resources provided by system information or dedicated signalling while inside a BS's coverage or by pre-configuration while outside of a BS's coverage.

For NR sidelink communication, the resource pool can be provided for a given validity area where the UE does not need to acquire a new pool of resources while moving within the validity area, at least when this pool is provided by SIB, e.g. reuse valid area of NR SIB. The UE is allowed to temporarily use UE autonomous resource selection with random selection for sidelink transmission based on configuration of the exceptional transmission resource pool as specified in TS 38.331.

FIG. 4B illustrates an exemplary flowchart of a sidelink RRC reconfiguration procedure in accordance with some embodiments of the present application. UE 1 and UE 2 refer to two V2X UEs. Each of UE 1 and UE 2 may refer to UE 101 as shown and illustrated in FIGS. 1 and 2 or one of V2X UEs (e.g., UE 401-A, UE 401-B, or UE 401-C) as shown and illustrated in FIG. 4A.

Specifically, in step 404 as shown in FIG. 4B, UE 1 may transmit RRC reconfiguration sidelink information to UE 2. For example, UE 1 transmits *RRCReconfigurationSidelink* message as specified in 3GPP standard documents to UE 2.

In step 406 as shown in FIG. 4B, the UE 2 may transmit RRC reconfiguration complete sidelink information to UE 1. For example, UE 2 transmits *RRCReconfigurationCompleteSidelink* message as specified in 3GPP standard documents to UE 1.

The purpose of a sidelink RRC reconfiguration procedure is to establish, modify, or release sidelink DRBs or configure NR sidelink measurement and report for a PC5-RRC connection. A UE (e.g., UE 1 as shown and illustrated in FIG. 4B) may start timer T400 as specified in 3GPP standard documents for the destination associated with the sidelink DRB, when the UE transmits *RRCReconfigurationSidelink* message.

In addition, the UE may initiate the sidelink RRC reconfiguration procedure and perform the operation in sub-clause 5.8.9.1.2 of TS38.331 to its peer UE of a sidelink in any of the following cases:
(1) The release of sidelink DRBs associated with the peer UE, as specified in sub-clause 5.8.9.1.4 of TS38.331.
(2) The establishment of sidelink DRBs associated with the peer UE, as specified in sub-clause 5.8.9.1.5 of TS38.331.
(3) The modification for the parameters included in *SLRB-Config* of sidelink DRBs associated with the peer LTE, as specified in sub-clause 5.8.9.1.5 of TS38.331.
(4) The configuration of the peer UE to perform NR sidelink measurement and report.

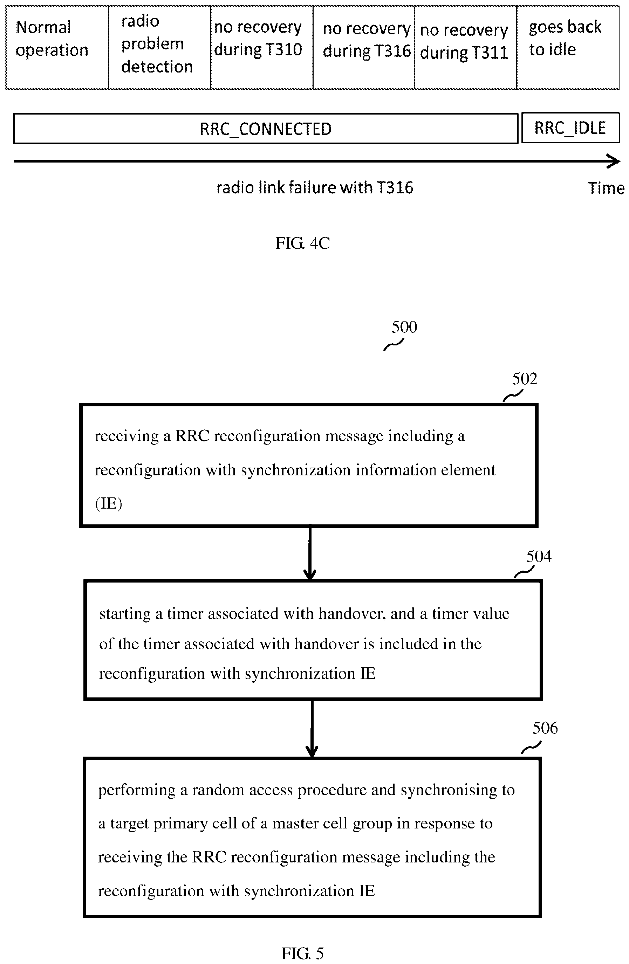

FIG. 4C illustrates an exemplary timeline of a RLF with a fast MCG link recovery procedure in accordance with some embodiments of the present application. The embodiments of FIG. 4C may be performed by a UE (e.g., UE 101 as shown and illustrated in FIG. 1).

As shown in FIG. 4C, a UE firstly performs a data transmission at a stage of a normal operation. The UE detects a radio problem if, for example, a MAC layer of the UE receives the N310 consecutive out-of-sync indication from a physical layer of the UE, which means a radio link problem occurs. The UE then starts a timer, e.g., timer T310 as specified in 3GPP standard documents. During the period of timer T310, if the MAC layer of the UE receives the N311 consecutive in-sync indication from the physical layer, which means that the UE is successfully connected to a network, the UE may stop timer T310.

When timer T310 expires, which means no recovery during timer T310, the UE initiates a fast MCG link recovery procedure. Specifically, the UE transmits MCG failure information to a MN (e.g., MN 102 as shown and illustrated in FIG. 1) via a SN (e.g., SN 103 as shown and illustrated in FIG. 1) and starts timer T316 as specified in 3GPP standard documents, as shown in FIG. 4C. If the UE receives RRC reconfiguration from the MN via the SN, the UE stops timer T316, which means that the fast MCG link recovery procedure is terminated. Otherwise, upon timer T316 expiry, which means no recovery during timer T316, the UE performs re-establishment procedure and starts timer T311 as specified in 3GPP standard documents for a cell selection.

If timer T311 expires, which means no recovery during timer T311, the UE goes back to an idle state, e.g., a RRC_IDLE state. Before timer T311 expires, the UE is in RRC_CONNECTED state as shown in FIG. 4C. After timer T311 expires, the UE enters into in the RRC_IDLE state as shown in FIG. 4C.

The above descriptions regarding the embodiments of FIG. 4C do not consider timer T312. Some embodiments assume that timer T312 as specified in 3GPP standard documents is configured. In these embodiments, the UE will start timer T312, if timer T310 is running and a measurement report for a measurement identity for which timer T312 has been configured is triggered. Once timer T312 expires, the UE may declare a failure and trigger a failure recovery procedure, e.g., a fast MCG link recovery procedure which has been configured.

Embodiments of the present application provide an enhanced failure report mechanism for MCG and SCG in various scenarios, for example, for failures happening when a MCG link recovery procedure and/or a SCG link recovery procedure are configured for a UE. More details on embodiments of the present application will be illustrated in the following text in combination with the appended drawings.

FIG. 5 illustrates a flow chart of a method for a handover procedure in accordance with some embodiments of the present application. The method may be performed by a UE (e.g., UE 101 as shown and illustrated in FIGS. 1 and 2 or one of V2X UEs as shown and illustrated in FIGS. 4A and 4B). For example, the UE may be configured with DC, in which the UE is connected to a MN (e.g., MN 102 as shown and illustrated in FIG. 1) and a SN 103 (e.g., SN 103 as shown and illustrated in FIG. 1).

As shown in FIG. 5, in step 502, a UE may receive RRC reconfiguration message including a reconfiguration with synchronization information element (IE). In an embodiment of the present application, the RRC reconfiguration message may be received in response to the UE being operating at a RRC connected state. The reconfiguration with synchronization IE may be *reconfigurationWithSync* IE as specified in 3GPP standard documents.

In step 504, the UE may start a timer associated with handover. A timer value of the timer associated with handover is included in the reconfiguration with synchronization IE. In an embodiment of the present application, the timer associated with handover is timer T304 as specified in 3GPP standard documents.

In an embodiment of the present application, DAPS configuration is included in the RRC reconfiguration message received by the UE. The UE may maintain both source and target connection when the UE is performing a DAPS handover procedure. The UE is not allowed to initiate a measurement reporting procedure in source. The measurement reporting procedure is specified in sub-clause 5.5.5 of TS38.331. The source can be a cell in a source BS, for example, SpCell of the MCG or the SCG.

In another embodiment of the present application, DAPS configuration is included in the RRC reconfiguration message received by the UE, the UE maintains measurement configuration information in source, and the UE is not allowed to initiate a measurement reporting procedure in source.

In step 506, in response to receiving the RRC reconfiguration message including the reconfiguration with synchronization IE, the UE performs a random access procedure and synchronising to a target primary cell of a master cell group. Configuration information of the target primary cell of the master cell group (e.g., a PCell) may be included in the reconfiguration with synchronization IE in the RRC reconfiguration message.

In an embodiment of the present application, in response to successfully synchronising to a target primary cell of a master cell group, the UE may further complete a handover procedure, and continue a timer for transmission of RRC reconfiguration for sidelink in response to successfully completing the handover procedure. The timer for transmission of RRC reconfiguration for sidelink may be timer T400 as specified in 3GPP standard documents.

In a further embodiment of the present application, in response to successfully synchronising to a target primary cell of a master cell group, the UE may further complete a handover procedure, and in response to successfully completing the handover procedure, the UE may stop all timers that are running in source except for a timer for transmission of RRC reconfiguration for sidelink (e.g., timer T400 as specified in 3GPP standard documents).

In an embodiment of the present application, sidelink communication information may be configured for the UE. In this embodiment, the UE may transmit RRC reconfiguration information for a sidelink message to its peer UE of a sidelink; and the UE may start a timer for transmission of RRC reconfiguration for sidelink (e.g., timer T400 as specified in 3GPP standard documents).

For instance, if the timer for transmission of RRC reconfiguration for sidelink expires, the UE may further perform a re-establishment procedure. The UE may go into a RRC idle state in response to a re-establishment failure. The UE may continue the timer for transmission of RRC reconfiguration for sidelink in response to going into the RRC idle state.

The embodiments of FIG. 5 may solve issues of: (1) when a UE is configured sidelink communication information, whether the UE should start or continue a timer for transmission of RRC reconfiguration for sidelink, if the UE goes to a RRC idle state; and (2) when a UE is configured sidelink communication information, whether the UE should start or continue a timer for transmission of RRC reconfiguration for sidelink, if the UE successfully completes a random access procedure and synchronize to a target primary cell of a master cell group.

The following texts describe a specific **Embodiment** 1 of the method as shown and illustrated in FIG. 5 for solving the above issues.

According to Embodiment 1, a UE (e.g., UE 101 as shown and illustrated in FIGS. 1 and 2 or one of V2X UEs as shown and illustrated in FIGS. 4A and 4B) and a BS perform the following steps:
(1) A UE may access to a BS. A dual connectivity (DC) operation may be configured to the UE. Sidelink communication information may be configured for the UE. If the UE is configured the sidelink communication information, the UE may transmit RRC reconfiguration information for a sidelink message to its peer UE of a sidelink and start timer T400 as specified in 3GPP standard documents.
(2) The BS (or Pcell) then may transmit a RRC reconfiguration message including *reconfigurationWithSync* IE to the UE. This step of the BS is associated with contents related to step 306 in FIG. 3. The RRC reconfiguration message including *reconfigurationWithSync* IE can be used for a mobility purpose. For example, The RRC reconfiguration message including *reconfigurationWithSync* IE can be used for a normal handover procedure, a conditional handover procedure, a DAPS handover procedure, and/or a PScell change procedure.
(3) The UE receives the RRC Reconfiguration message including *reconfigurationWithSync* IE from the BS.
(4) The UE then may execute a reconfiguration with sync procedure. The UE may trigger a random access procedure according to the received RRC Reconfiguration message. More specifically:
   - If *reconfigurationWithSync* IE was included in the received RRC Reconfiguration message, when the UE may start timer T304 as specified in 3GPP standard documents. The UE may perform a random access procedure and synchronize to a target PCell of a MCG, in response to receiving the RRC reconfiguration message including the *reconfigurationWithSync* IE.
   - If *reconfigurationWithSync* IE was included in *spCellConfig* IE of a MCG or a SCG and *spCellConfig* IE was included in the received RRC Reconfiguration message, when a MAC layer of an NR cell group successfully completes the random access procedure triggered by the UE, the UE may stop timer T312 for a source, if timer T312 is running.
   - The UE may also stop timer T304 for that cell group and stop timer T310 for the source, if timer T304 and timer T310 are running.
   - If DAPS configuration is included in the RRC reconfiguration message, and if the UE maintains both source and target connection when performing a DAPS handover procedure, the UE is not allowed to initiate a measurement reporting procedure in source. The source can be a cell in a source BS.
   - If DAPS configuration is included in the RRC reconfiguration message, and if the UE maintains measurement configuration information in source, the UE is not allowed to initiate a measurement reporting procedure.
   - If configuration information of a DAPS handover procedure (e.g., *dapsConfig* as specified in 3GPP standard documents) is not configured for any data radio bearer (DRB), the UE may stop timer T312 for the corresponding SpCell, if timer T312 is running. Also, UE may stop timer T310 for the corresponding SpCell, if timer T310 is running.
   - The UE may start timer T304 for the corresponding SpCell with the timer value set to *t304,* as included in the *reconfigurationWithSync* IE.
(5) After successfully completing the triggered random access procedure, the UE shall apply the corresponding configuration information. For example, the corresponding configuration information include:
   - Parts of channel state information (CSI) reporting configuration, scheduling request configuration, and sounding RS configuration that do not require the UE to know a system frame number (SFN) of the respective target SpCell, if any.
   - Parts of measurement and the radio resource configuration that requires the UE to know the SFN of the respective target SpCell, if any, upon acquiring the SFN of that target SpCell.
(6) If the UE successfully synchronizes to the target PCell of the MCG, the UE may perform any of the following actions. For example:
   - The UE completes a handover procedure; and in response to successfully completing the handover procedure, the UE continues timer T400 as specified in 3GPP standard documents.
   - The UE completes a handover procedure; and in response to successfully completing the handover procedure, the UE stops all timers that are running in source except for timer T400 as specified in 3GPP standard documents.
(7) If the UE cannot successfully synchronize to the target PCell of the MCG while timer T304 expires, the UE may perform any of the following actions.
   - The UE performs a re-establishment procedure.
   - The UE enters into a RRC_IDLE state in response to a re-establishment failure during the re-establishment procedure (i.e., the RRC re-establishment procedure is not successful).
   - The UE continues timer T400 in response to going into the RRC idle state.

Details described in all other embodiments of the present application (for example, details of how to improve provide an enhanced failure report mechanism for a MCG or a SCG) are applicable for the embodiments of FIG. 5. Moreover, details described in the embodiments of FIG. 5 are applicable for all the embodiments of FIGS. 1-4C, 6, and 7.

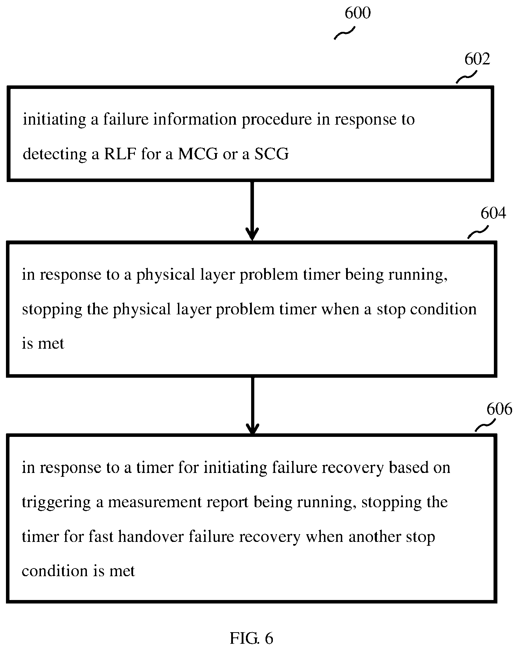

FIG. 6 illustrates a further flow chart of a method for a failure information procedure in accordance with some embodiments of the present application. The method may be performed by a UE (e.g., UE 101 as shown and illustrated in FIGS. 1 and 2 or one of V2X UEs as shown and illustrated in FIGS. 4A and 4B). For example, the UE may be configured with DC, in which the UE is connected to a MN (e.g., MN 102 as shown and illustrated in FIG. 1) and a SN 103 (e.g., SN 103 as shown and illustrated in FIG. 1).

As shown in FIG. 6, in step 602, a UE may initiate a failure information procedure in response to detecting a radio link failure (RLF) for a MCG or a SCG. For instance, after the UE detects a RLF for a PCell in a MCG or PScell in a SCG, the UE may initiate a failure information procedure. The failure information procedure may refer to a SCG failure information procedure or a MCG failure information procedure as shown and illustrated in the embodiments of FIG. 2.

In an embodiment of the present application, if the UE detects the RLF for the MCG or the SCG, the RLF is associated with a SpCell.

According to some embodiments of the present application, if the UE detects a RLF for the SCG, the failure information procedure may be a SCG failure information procedure. The SCG failure information procedure may be initiated when one of following conditions is met:
(1) upon detecting the RLF for the SCG;
(2) upon a reconfiguration with sync failure of the SCG;
(3) upon a SCG configuration failure; or
(4) upon an integrity check failure indication from SCG lower layers concerning SRB3 .

In step 604 as shown in FIG. 6, if a physical layer problem timer is running, the UE may stop the physical layer problem timer when a stop condition is met. The physical layer problem timer may be timer T310 as specified in 3GPP standard documents.

According to some embodiments of the present application, the physical layer problem timer (e.g., timer T310) is started when a start condition is met. The start condition may include one of the following conditions:
(1) Upon receiving a pre-configured number of consecutive "out-of-sync" indications for a primary cell of a master cell group or secondary cell group (SpCell). The pre-configured number of consecutive "out-of-sync" indications may be N310 as specified in 3GPP standard documents.
(2) Upon determining that a timer for fast MCG link recovery is not running. The timer for fast MCG link recovery may be timer T316 as specified in 3GPP standard documents.
(3) Upon determining that none of following timers is running:
   a timer for RRC setup request (e.g., timer T300 as specified in 3GPP standard documents);
   a timer for RRC re-establishment request (e.g., timer T301 as specified in 3GPP standard documents);
   a handover timer (e.g., timer T304 as specified in 3GPP standard documents);
   a timer for RRC connection re-establishment (e.g., timer T311 as specified in 3GPP standard documents); and
   a timer for RRC resume request (e.g., timer T319 as specified in 3GPP standard documents).

After the UE starts a physical layer problem timer (e.g., timer T310), a measurement report for a measurement identity, for which T312 has been configured, is triggered. UE may start a timer for initiating failure recovery based on triggering a measurement report, if DAPS configuration is not configured and the timer for initiating failure recovery based on triggering a measurement report is not running.

According to some embodiments of the present application, if the UE detects the RLF for the SCG, the failure information procedure is a SCG failure information procedure, and the stop condition in step 604, which is for stopping the physical layer problem timer, includes initiating the SCG failure information procedure. In particular, for example, after detecting the RLF for the SCG, the UE may initiate a SCG failure information procedure and stop timer T310 after initiating the SCG failure information procedure.

In an embodiment of the present application, a timer for fast MCG link recovery may be configured. The timer for fast MCG link recovery may be T316 as specified in 3GPP standard documents. In this embodiment, if the UE detects a RLF for the MCG, the failure information procedure may be a MCG failure information procedure, since a timer for fast MCG link recovery is configured. The stop condition for stopping the physical layer problem timer in step 604 may include initiating the MCG failure information procedure.

In step 606 as shown in FIG. 6, if a timer for initiating failure recovery based on triggering a measurement report is running, the UE may stop the timer for initiating failure recovery based on triggering a measurement report when another stop condition is met. The timer for initiating failure recovery based on triggering a measurement report may be timer T312 as specified in 3GPP standard documents.

According to some embodiments of the present application, if the UE detects the RLF for the SCG, the failure information procedure is a SCG failure information procedure, and the abovementioned another stop condition in step 606, which is for stopping the timer for initiating failure recovery based on triggering a measurement report, includes initiating the SCG failure information procedure. For example, after detecting the RLF for the SCG, the UE may initiate a SCG failure information procedure and stop timer T312 after initiating the SCG failure information procedure.

In an embodiment of the present application, a timer for fast MCG link recovery may be configured. The timer for fast MCG link recovery may be T316 as specified in 3GPP standard documents. In this embodiment, if the UE detects a RLF for the MCG, the failure information procedure may be a MCG failure information procedure, since a timer for fast MCG link recovery is configured. The abovementioned another stop condition in step 606, which is for stopping the timer for initiating failure recovery based on triggering a measurement report, may include initiating the MCG failure information procedure.

The embodiments of FIG. 6 may solve issues of: (1) whether a UE should stop a timer for initiating failure recovery based on triggering a measurement report (e.g., timer T312) or a physical layer problem timer (e.g., timer T310), if the UE initiates a SCG failure information procedure; (2) whether a UE should stop a timer for initiating failure recovery based on triggering a measurement report (e.g., timer T312) or a physical layer problem timer (e.g., timer T310), if the UE initiates a MCG failure information procedure; and (3) whether a UE should stop a physical layer problem timer (e.g., timer T310), if a timer for fast MCG link recovery (e.g., timer T316) is running.

The following texts describe three specific embodiments of the method as shown and illustrated in FIG. 6 for solving the above issues.

### Embodiment 2

According to Embodiment 2, a UE (e.g., UE 101 as shown and illustrated in FIG. 1) and a BS perform the following steps:
(1) A UE may access a network via a DC operation. A MCG and a SCG may be configured to the UE.
(2) The UE may initiate a SCG failure information procedure to report a failure of the SCG, when neither MCG transmission nor SCG transmission is suspended and when one of the following conditions is met:
   - upon detecting a RLF for the SCG;
   - upon a reconfiguration with sync failure of the SCG;
   - upon a SCG configuration failure; or
   - upon an integrity check failure indication from SCG lower layers concerning SRB3.
(3) Upon initiating the SCG failure information procedure, the UE may:
   - stop timer T310 for the SCG, if timer T310 is running;
   - stop timer T312 for the SCG, if timer T312 is running;
   - suspend a SCG transmission for all SRBs and DRBs;
   - reset a MAC layer of the SCG; and/or
   - stop timer T304 for the SCG, if timer T304 is running.
(4) The UE reports *SCGFailureInformation* message to a MN (e.g., MN 102 as shown and illustrated in FIG. 1).

### Embodiment 3

According to Embodiment 3, a UE (e.g., UE 101 as shown and illustrated in FIG. 1) and a BS perform the following steps:
(1) A UE may access a network via a DC operation. A MCG and a SCG may be configured to the UE. Timer T316 may be configured.
(2) The UE may initiate a MCG failure information procedure to report a RLF of the MCG, when neither MCG transmission nor SCG transmission is suspended and when the RLF of the MCG is detected and Timer T316 is not running.
(3) Upon initiating the MCG failure information procedure, the UE may:
   - stop timer T310 for the MCG, if timer T310 is running;
   - stop timer T312 for the MCG, if timer T312 is running;
   - suspend a MCG transmission for all SRBs and DRBs, except SRB0; or
   - reset a MAC layer of the MCG.
(4) The UE reports *MCGFailureInformation* message to a MN (e.g., MN 102 as shown and illustrated in FIG. 1) via SN (e.g., SN 103 as shown and illustrated in FIG. 1).

### Embodiment 4

According to Embodiment 4, a UE (e.g., UE 101 as shown and illustrated in FIG. 1) and a BS perform the following steps:
(1) A UE may access to a BS. ADC operation may be configured to the UE.
(2) The UE (e.g., a physical layer of the UE) may detect a physical channel and transmits an indication (e.g., an "out-of-sync" indication) to a MAC layer of the UE.
(3) The UE may start timer T310 for the corresponding SpCell upon receiving N310 consecutive "out-of-sync" indications for the SpCell from lower layers while none of timers T300, T301, T304, T311, T316 and T319 which are described in the above Table 1 is running.
(4) The UE shall stop timer T310 for the corresponding SpCell upon receiving N311 consecutive "in-sync" indications for the SpCell from lower layers while timer T310 is running. Otherwise, the UE declares the RLF upon timer T310 expiry.
(5) After the UE starts timer T310 for the SpCell, a measurement report for a measurement identity, for which timer T312 has been configured, is triggered. The UE may start a timer for initiating failure recovery based on triggering a measurement report, if DAPS configuration is not configured and timer T312 is not running.

Details described in all other embodiments of the present application (for example, details of how to improve provide an enhanced failure report mechanism for a MCG or a SCG) are applicable for the embodiments of FIG. 6. Moreover, details described in the embodiments of FIG. 6 are applicable for all the embodiments of FIGS. 1-5 and 7.

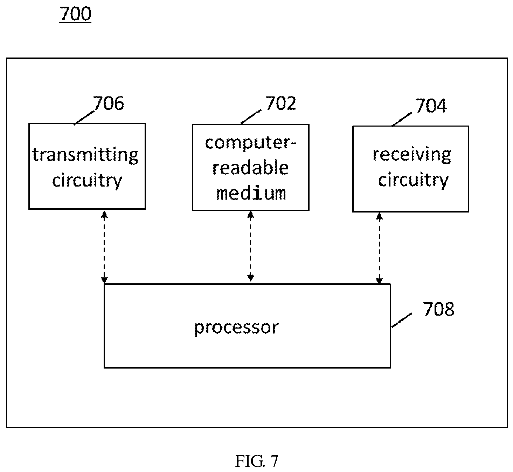

FIG. 7 illustrates a simplified block diagram of an apparatus 700 for an enhanced failure report mechanism in accordance with some embodiments of the present application. The apparatus 700 may be a UE 101 as shown in FIG. 1.

Referring to FIG. 7, the apparatus 700 may include at least one non-transitory computer-readable medium 702, at least one receiving circuitry 704, at least one transmitting circuitry 706, and at least one processor 708. In some embodiment of the present application, at least one receiving circuitry 704 and at least one transmitting circuitry 706 and be integrated into at least one transceiver. The at least one non-transitory computer-readable medium 702 may have computer executable instructions stored therein. The at least one processor 708 may be coupled to the at least one non-transitory computer-readable medium 702, the at least one receiving circuitry 704 and the at least one transmitting circuitry 706. The computer executable instructions can be programmed to implement a method with the at least one receiving circuitry 704, the at least one transmitting circuitry 706 and the at least one processor 708. The method can be a method according to an embodiment of the present application, for example, the corresponding method shown in FIG. 5 or FIG.6.

The method according to embodiments of the present application can also be implemented on a programmed processor. However, the controllers, flowcharts, and modules may also be implemented on a general purpose or special purpose computer, a programmed microprocessor or microcontroller and peripheral integrated circuit elements, an integrated circuit, a hardware electronic or logic circuit such as a discrete element circuit, a programmable logic device, or the like. In general, any device on which resides a finite state machine capable of implementing the flowcharts shown in the figures may be used to implement the processor functions of this application. For example, an embodiment of the present application provides an apparatus for emotion recognition from speech, including a processor and a memory. Computer programmable instructions for implementing a method for emotion recognition from speech are stored in the memory, and the processor is configured to perform the computer programmable instructions to implement the method for emotion recognition from speech. The method may be a method as stated above or other method according to an embodiment of the present application.

An alternative embodiment preferably implements the methods according to embodiments of the present application in a non-transitory, computer-readable storage medium storing computer programmable instructions. The instructions are preferably executed by computer-executable components preferably integrated with a network security system. The non-transitory, computer-readable storage medium may be stored on any suitable computer readable media such as RAMs, ROMs, flash memory, EEPROMs, optical storage devices (CD or DVD), hard drives, floppy drives, or any suitable device. The computer-executable component is preferably a processor but the instructions may alternatively or additionally be executed by any suitable dedicated hardware device. For example, an embodiment of the present application provides a non-transitory, computer-readable storage medium having computer programmable instructions stored therein. The computer programmable instructions are configured to implement a method for emotion recognition from speech as stated above or other method according to an embodiment of the present application.

While this application has been described with specific embodiments thereof, it is evident that many alternatives, modifications, and variations may be apparent to those skilled in the art. For example, various components of the embodiments may be interchanged, added, or substituted in the other embodiments. Also, all of the elements of each figure are not necessary for operation of the disclosed embodiments. For example, one of ordinary skill in the art of the disclosed embodiments would be enabled to make and use the teachings of the application by simply employing the elements of the independent claims. Accordingly, embodiments of the application as set forth herein are intended to be illustrative, not limiting. Various changes may be made without departing from the spirit and scope of the application.

Further aspects of the invention are provided by the subject matter of the following numbered clauses:
1: A method, comprising: in response to operating at a radio resource control (RRC) connected state, receiving a RRC reconfiguration message including a reconfiguration with synchronization information element (IE); starting a timer associated with handover, wherein a timer value of the timer associated with handover is included in the reconfiguration with synchronization IE; and performing a random access procedure and synchronising to a target primary cell of a master cell group in response to receiving the RRC reconfiguration message including the reconfiguration with synchronization IE.
2: The method of clause 1, wherein dual active protocol stack (DAPS) configuration is included in the RRC reconfiguration message; and the method further comprising: not allowing to initiate a measurement reporting procedure in source.
3: The method of clause 1, wherein DAPS configuration is included in the RRC reconfiguration message; and the method further comprising: maintaining measurement configuration information in source; and not allowing to transmit a measurement result report.
4: The method of clause 1, wherein sidelink communication information is configured, and the method further comprising: transmitting RRC reconfiguration information for a sidelink message to a peer UE of a sidelink; and starting a timer for transmission of RRC reconfiguration for sidelink.
5: The method of clause 4, wherein in response to the timer associated with handover expiring, the method further comprising: performing a re-establishment procedure; going into a RRC idle state in response to a re-establishment failure; and continuing the timer for transmission of RRC reconfiguration for sidelink in response to going into the RRC idle state.
6: The method of clause 1, in response to successfully synchronising to the target primary cell of the master cell group, the method further comprising: completing a handover procedure; and continuing a timer for transmission of RRC reconfiguration for sidelink in response to successfully completing the handover procedure.
7: The method of clause 1, in response to successfully synchronising to the target primary cell of the master cell group, the method further comprising: completing a handover procedure; and stopping all timers that are running in source except for a timer for transmission of RRC reconfiguration for sidelink in response to successfully completing the handover procedure.
8: A method, comprising: initiating a failure information procedure in response to detecting a radio link failure (RLF) for a master cell group (MCG) or a secondary cell group (SCG); in response to a physical layer problem timer being running, stopping the physical layer problem timer when a second stop condition is met; and in response to a timer for initiating failure recovery based on triggering a measurement report being running, stopping the timer for initiating failure recovery based on triggering a measurement report when a third stop condition is met.
9: The method of clause 8, wherein: a timer for fast MCG link recovery is configured; in response to detecting a RLF for the MCG, the failure information procedure is a MCG failure information procedure; and the second stop condition includes initiating the MCG failure information procedure.
10: The method of clause 8, wherein: a timer for fast MCG link recovery is configured; in response to detecting a RLF for the MCG, the failure information procedure is a MCG failure information procedure; and the third stop condition includes initiating the MCG failure information procedure.
11: The method of clause 8, wherein: in response to detecting a RLF for the SCG, the failure information procedure is a SCG failure information procedure, and the SCG failure information procedure is initiated when one of following conditions is met: upon detecting the RLF for the SCG; upon a reconfiguration with sync failure of the SCG; upon a SCG configuration failure; and upon an integrity check failure indication from SCG lower layers concerning signaling radio bearer (SRB) 3.
12: The method of clause 8, wherein in response to detecting the RLF for the SCG, the failure information procedure is a SCG failure information procedure, the second stop condition includes: initiating the SCG failure information procedure.
13: The method of clause 8, in response to detecting the RLF for the SCG, the failure information procedure is a SCG failure information procedure, the third stop condition includes: initiating the SCG failure information procedure.
14: The method of clause 8, in response to detecting the RLF for the MCG or the SCG, the RLF is associated with a primary cell of a master cell group or secondary cell group (SpCell).
15: An apparatus, comprising: at least one non-transitory computer-readable medium having stored thereon computer-executable instructions; at least one receiving circuitry; at least one transmitting circuitry; and at least one processor coupled to the at least one non-transitory computer-readable medium, the at least one receiving circuitry and the at least one transmitting circuitry, wherein the computer-executable instructions cause the at least one processor to implement the method of any of clauses 1-7.
16: An apparatus, comprising: at least one non-transitory computer-readable medium having stored thereon computer-executable instructions; at least one receiving circuitry; at least one transmitting circuitry; and at least one processor coupled to the at least one non-transitory computer-readable medium, the at least one receiving circuitry and the at least one transmitting circuitry, wherein the computer-executable instructions cause the at least one processor to implement the method of any of clauses 8-14.

## Claims

1. A method, comprising:
initiating a failure information procedure in response to detecting a radio link failure (RLF) for a master cell group (MCG) or a secondary cell group (SCG);
in response to a physical layer problem timer being running, stopping the physical layer problem timer when a second stop condition is met; and
in response to a timer for initiating failure recovery based on triggering a measurement report being running, stopping the timer for initiating failure recovery based on triggering a measurement report when a third stop condition is met.

2. The method of claim 1, wherein:
a timer for fast MCG link recovery is configured;
in response to detecting a RLF for the MCG, the failure information procedure is a MCG failure information procedure; and
the second stop condition includes initiating the MCG failure information procedure.

3. The method of claim 1, wherein:
a timer for fast MCG link recovery is configured;
in response to detecting a RLF for the MCG, the failure information procedure is a MCG failure information procedure; and
the third stop condition includes initiating the MCG failure information procedure.

4. The method of claim 1, wherein:
in response to detecting a RLF for the SCG, the failure information procedure is a SCG failure information procedure, and
the SCG failure information procedure is initiated when one of following conditions is met:
upon detecting the RLF for the SCG;
upon a reconfiguration with sync failure of the SCG;
upon a SCG configuration failure; and
upon an integrity check failure indication from SCG lower layers concerning signaling radio bearer (SRB) 3.

5. The method of claim 1, wherein in response to detecting the RLF for the SCG, the failure information procedure is a SCG failure information procedure, the second stop condition includes:
initiating the SCG failure information procedure.

6. The method of claim 1, in response to detecting the RLF for the SCG, the failure information procedure is a SCG failure information procedure, the third stop condition includes:
initiating the SCG failure information procedure.

7. The method of claim 1, in response to detecting the RLF for the MCG or the SCG, the RLF is associated with a primary cell of a master cell group or secondary cell group (SpCell).

8. An apparatus for wireless communication, the apparatus comprising: at least one memory; and at least one processor coupled with the at least one memory and configured to cause the apparatus to:
initiate a failure information procedure in response to detecting a radio link failure (RLF) for a master cell group (MCG) or a secondary cell group (SCG);
in response to a physical layer problem timer being running, stop the physical layer problem timer when a second stop condition is met; and
in response to a timer for initiating failure recovery based on triggering a measurement report being running, stop the timer for initiating failure recovery based on triggering a measurement report when a third stop condition is met.

9. The apparatus of claim 8, wherein the at least one processor is further configured to cause the apparatus to:
configure a timer for fast MCG link recovery;
wherein, in response to the at least one processor detecting a RLF for the MCG, the failure information procedure is a MCG failure information procedure; and
wherein the second stop condition includes initiating the MCG failure information procedure.

10. The apparatus of claim 8, wherein the at least one processor is further configured to cause the apparatus to:
configure a timer for fast MCG link recovery;
wherein, in response to detecting a RLF for the MCG, the failure information procedure is a MCG failure information procedure; and
wherein the third stop condition includes initiating the MCG failure information procedure.

11. The apparatus of claim 8, wherein:
in response to detecting a RLF for the SCG, the failure information procedure is a SCG failure information procedure, and
the at least one processor is further configured to cause the apparatus to initiate the SCG failure information procedure when one of following conditions is met:
upon detecting the RLF for the SCG;
upon a reconfiguration with sync failure of the SCG;
upon a SCG configuration failure; and
upon an integrity check failure indication from SCG lower layers concerning signaling radio bearer (SRB) 3.

12. The apparatus of claim 8, wherein in response to the at least one processor detecting the RLF for the SCG, the failure information procedure is a SCG failure information procedure, the second stop condition includes:
initiating the SCG failure information procedure.

13. The apparatus of claim 8, in response to the at least one processor detecting the RLF for the SCG, the failure information procedure is a SCG failure information procedure, the third stop condition includes:
initiating the SCG failure information procedure.

14. The apparatus of claim 8, in response to the at least one processor detecting the RLF for the MCG or the SCG, the RLF is associated with a primary cell of a master cell group or secondary cell group (SpCell).

15. A processor for wireless communication, comprising: at least one controller coupled with at least one memory and configured to cause the processor to:
initiate a failure information procedure in response to detecting a radio link failure (RLF) for a master cell group (MCG) or a secondary cell group (SCG);
in response to a physical layer problem timer being running, stop the physical layer problem timer when a second stop condition is met; and
in response to a timer for initiating failure recovery based on triggering a measurement report being running, stop the timer for initiating failure recovery based on triggering a measurement report when a third stop condition is met.
